# EUROPEAN PATENT SPECIFICATION

(11) **EP 2 755 492 B1**
(45) Date of publication and mention of the grant of the patent: **22.07.2015**
(21) Application number: 12756476.3
(22) Date of filing: 10.09.2012
(51) Int. Cl.: A23C 19/076, A23D 7/005, A23D 7/015, A23K 1/16, A23L 1/0526, A23L 1/314, A23L 1/315, A23L 1/308

(54) **USE OF FAT SUBSTITUTE COMPOSITIONS COMPRISING INULIN AND CASSIA GUM**
VERWENDUNG VON FETTERSATZZUSAMMENSETZUNGEN ENTHALTEND INULIN UND CASSIA GUM
UTILISATION DE COMPOSITIONS SUBSTITUÉES DE GRAISSE COMPRENANT DE L'INULINE ET DE LA GOMME DE CASSIA

(30) Priority: 16.09.2011 EP 11181619
(43) Date of publication of application: 23.07.2014
(73) Proprietor: Lubrizol Advanced Materials, Inc., Cleveland, OH 44141-3247 (US)
(72) Inventor: VEEN, Markus, 84453 Muehldorf/Inn (DE); BUDEMANN, Achim, 83367 Petting (DE)
(74) Representative: Von Kreisler Selting Werner - Partnerschaft von Patentanwälten und Rechtsanwälten mbB
(86) International application number: PCT/EP2012/067661
(87) International publication number: WO 2013/037739

(56) References cited:
- EP-A1- 0 596 546
- WO-A1-2004/113390
- US-A- 5 527 556
- US-A- 5 656 317
- US-A- 6 120 809
- US-A1- 2008 075 831
- 'ROYAL CANIN Veterinary Diet RECOVERY RS(TM) Nutritional Differences: Anti Oxidative Stress: High Palatability: Easy Tube Feeding: Feeding Recommendations for Feline Resting Energy Requirements', [Online] 07 May 2010, XP055141554 Retrieved from the Internet: <URL:http://pets.petsmart.com/guides/prescr iption-foods/_downloads/felinerecovery.pdf> [retrieved on 2014-09-19]

## Description

### Field of the Invention

The invention relates to the use of a composition comprising Cassia gum and inulin as a fat substitute for fat reduced food, fodder and beverage products.

The compositions used as fat substitute provide for an improved mouth feel and smooth texture in fat reduced food, fodder and beverage products.

### Background of the Invention

Galactomannans such as Cassia gum are generally known as gelling and binding agents, thickeners, and stabilizers, for enhancing the rheology, psychosensory, and aesthetics in food and fodder compositions in which they are included.

Hydrocolloids are derived from polysaccharides that can be extracted from the endosperm of seeds from plants, shrubs and trees of the families Leguminosae and Fabraceae or can be extracted from the cell walls of algal plants or seaweeds that are classified into four principal groups of the families Chlorophyceae (green algae), Cyanophyceae (blue-green algae), Phaeophyceae (brown algae), and Rodophyceae (red algae).

Galactomannans (used interchangeably with the term polygalactomannan herein) are a class of polysaccharides that are found in the endosperm material of seeds from leguminous plants such as Cyamopsis tetragonoloba (Guar gum), Cesalpinia spinosa (Tara gum), Ceratonia siliqua (Locust Bean gum), and other members of the Leguminosae family. A galactomannan is composed of a backbone of 1→4-linked β-D-mannopyranosyl main chain units (also designated herein as a mannoside unit or residue) with recurring 1→6-linked α-D-galactosyl side groups (also designated herein as a galactoside unit or residue) branching from the number 6 carbon atom of a mannopyranose residue in the polymer backbone.

The galactomannan polymers of the different Leguminosae species differ from one another in the frequency of the occurrence of the galactoside side units branching from the polymannoside backbone. The mannoside and galactoside units are generically referred to herein as glycoside units or residues. The average ratio of D-mannoside to D-galactoside units in the galactomannan contained in Guar gum is approximately 1.5:1 or 2:1, approximately 3:1 for Tara gum, and approximately 4:1 for Locust Bean gum. Another important source of polygalactomannan is isolated from the endosperm of the seeds of Cassia tora and Cassia obtusifolia (collectively known as Cassia gum). The average ratio of D-mannosyl to D-galactosyl units in the polygalactomannan contained in Cassia gum (derived from Cassia tora and Cassia obtusifolia) is at least 5:1.

It is well understood by those skilled in the art that natural galactomannans, even when obtained from a single source, will contain varying ranges of mannose to galactose ratios. Accordingly, these mannose to galactose ratios are reported as average ratios. The monosaccharide content of Cassia gum can be determined using a method adapted from Englyst et al. ("Determination of Dietary Fibre as Non-Starch Polysaccharides by Gas-Liquid Chromatography" Analyst (117), November 1992, pp. 1707-1714). For illustrative purposes galactomannans obtained from the endosperm of Cassia seed can be schematically represented by the following structure: 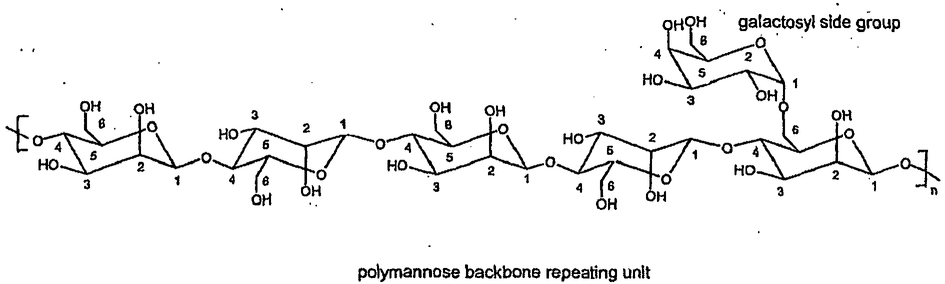 wherein n represents the number of repeating units in the galactomannan polymer.

In an embodiment of the invention, the polygalactomannan used in the practice of this invention typically has a weight average molecular weight (Mw) which is within the range of about 100,000 Daltons or more to about 1,500,000 Daltons or less. In many cases, the polygalactomannan has a weight average molecular weight, which is within the range of about 300,000 Daltons or more to about 1,000,000 Daltons or less. It is common for the galactomannan used in the practice of this invention to have a weight average molecular weight, which is within the range of about 400,000 Daltons or more to about 900,000 Daltons or less. The molecular weight of the galactomannan can be varied through controlled degradation procedures known in the art.

Polygalactomannans can also be distinguished by way of their Brookfield viscosity. Under specified measurement conditions Cassia gum can reliably distinguished from, for instance, Locust Bean gum by referring to this parameter. Due to its non-soluble character in cold water (20 °C), the Brookfield viscosity of Cassia gum is significantly lower than that of Locust Bean gum or Guar gum.

Typically, the endosperm flour extracted from the seeds of Cassia, Locust Bean, Tara and Guar contains from about 3 to about 12 % water, up to about 2 % fat, up to about 7 % raw protein, up to about 4 % raw fiber, up to about 2 % ash, and at least 75 % residual polysaccharide.

Methods for isolating galactomannans from the respective seeds and their purification are known in the art, such as from U.S. Patent No. 2,891,050; U.S. Patent No. 4,840,811; U.S. Patent No. 4,427,707; German published patent application DE 10047278; WO 2004/113390, WO 2006/062792, WO 2008/057772 and the prior art cited therein.

The use of galactomannans as gelling and thickening agent in food and fodder compositions is described in U.S. Patent No. 4,661,475; WO 2004/113390; WO 2006/062792; WO 2008/057772; U.S. published patent application 2008/0113079; U.S. Patent No. 4,952,686; and DE 10047278.

US 5527556 discloses a composition having a creamy structure and comprising a mixture of inulin, a liquid and a component which influences the dissolution and dispersion of the inulin and/or reduces the agglomeration of the composition during reconstruction after drying the composition, preferably a gum.

ROYAL CANIN Veterinary Diet RECOVERY RS(TM) Nutritional Differences: Anti Oxidative Stress: High Palatability: Easy Tube Feeding: Feeding Recommendations for Feline Resting Energy Requirements, 7 May 2010, XP055141554, discloses a food for cats and dogs with particular nutritional needs, having a texture that stays moist and smooth, which comprises both inulin and cassia gum.

Inulin is a water soluble polydisperse carbohydrate composition consisting mainly, if not exclusively of β(1→2)fructosyl-fructose links. A starting glucose moiety can be present, but is not necessary. Typically, inulin is a mixture of oligomers and polymers. The degree of polymerization (DP) and the presence of branches are important characteristics. Inulin of plant origin usually has a DP < 200 and a branching degree of about 1 to 2 %.

Inulin-containing plants that are commonly used for human or animal nutrition belong mainly to Liliacea, e.g., leek, onion, garlic and asparagus, or the Compositae, e.g., Jerusalem artichoke, dahlia, chicory and yacon. In chicory inulin, the number of fructose units (DP) linked to a terminal glucose can vary from about 2 to about 70, or from about 5 to about 65, in an alternative embodiment from about 15 to about 60, in a still further embodiment from about 23 to about 50.

For illustrative purposes inulin can be schematically represented by the following structure:

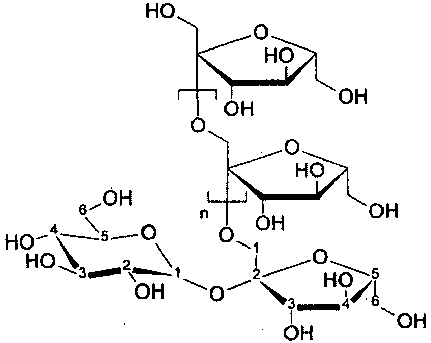

Inulin is used in the manufacturing of many food and fodder products, beverages and as well non-food products. In food, fodder and beverages, inulin is used, as a bulking agent as well as a total or partial substitute for sugar and/or fat. For the use as fat replacer inulin may have, in another embodiment should have an average polymerization degree of about 10 or higher, in another embodiment about 15 or higher, in still another embodiment about 23 or higher.

The desire for improved health, improved fitness and tasteful and healthy food, requires a reduction of fat intake with daily meals. However, reducing fat intake by reducing the intake of foods and beverages containing fat is undesirable in light of the general observation that foods and beverages with a high fat content typically have a more pleasing mouth feel, improved mouth fullness (body) and a smooth texture than comparable foods and beverages with a low fat content. However, the problem of many fat substitutes is that they have an unusual and finally inacceptable high viscosity, which influences the original and intended texture of the final food or beverage product.

Therefore it is desirable to provide compositions suitable for use as food ingredient which can be used to replace fat in foods with a non-fat, edible material having both a full mouth feel and mouth fullness (body) as well as a smooth texture comparable to that of fat and physical properties that allow the composition to retain its original and intended texture during processing.

In fat reduced food and beverage products often the mouth feel and/or smooth texture acceptance is low. Several attempts have been made in order to increase the mouth feel and fat like texture in low fat food and beverage formulations. Fructose polymers, such as inulin or oligofructose products are successfully used to imitate a fatty appearance of certain food formulations. However, in many cases, fructose polymers alone do not or do only at very high concentrations fulfill this demand. The intended and from the consumer requested mouth feel, mouth fullness (body) and smooth texture which is the major characteristic of fat and oil in many food and beverage formulations, is not given by those additives alone. Furthermore digestive problems for the consumers can occur, if the intake dosage of a fructose polymer is too high, since polymers like inulin are non-digestible and lead to intense gas formation in the intestinal tract. Beyond this, high dosages of fructose polymers (10 % and more) lead to a sweet off taste of the processed food or beverage products.

Therefore inulin is often combined with other additives, like fiber products or gums like Guar or xanthan. However, those additives have the disadvantage, that they negatively modify the viscosity of the final product. Those fiber and gum products are intended to form a pulpy, pasty or viscous and/or gelling consistency, which help to imitate a mouth fullness of the end product.

European published patent application EP 0596546 proposes a preparation of fructose polymers and another biopolymer to produce a fat reduced spread. However, the proposed and necessary dosage of the fat substitute in this patent application is much too high and therefore the viscosity, texture and taste of many food and beverage products would negatively be influenced by this proposed composition. Beyond that, fiber products have the disadvantage that they form non-smooth structures.

So far several attempts have been made to overcome said disadvantages. U.S. Patent No. 7,897,185 is related to cream cheese products comprising stabilizers, such as various gums in combination with inulin. U.S. Patent No. 5,939,127 is directed to fat free and low fat cookie cream fillings comprising inulin and a gelling agent such as polysaccharide gums. U.S. Patent No. 6,120,809 suggests systems for making reduced fat cheese comprising hydrocolloids and inulin. U.S. published patent application 2008/0075831 relates to non-fat and low-fat food beverage products comprising inulin and polyglutamic acid. However, by none of these low fat food compositions satisfactory results with respect to the texture of the product in comparison with the respective standard fat/oil-containing product could be achieved.

Thus it has been an objective of the present invention to provide a composition which has the following properties:
1) Improved mouth feel, mouth fullness (body) as well as smoothness in food systems and beverages.
2) Substitution of up to 100 % fat or oil in food, fodder or beverage formulations.
3) No increase of the viscosity of the fat-free or fat-reduced food, fodder or beverage formulations. No pulpy or pasty consistency.
4) No sweet off-taste of processed food or beverage products.

The present inventors have now unexpectedly found that fat-reduced or fat-free food products or beverages can be prepared in an industrially economical way by using the hydrocolloid Cassia gum in combination with inulin to fulfill the above mentioned properties. The consistency and texture of the fat substitute is comparable to liquid fat products (e.g. milk cream) or oil (e.g. vegetable oil).

### Description of the Drawling

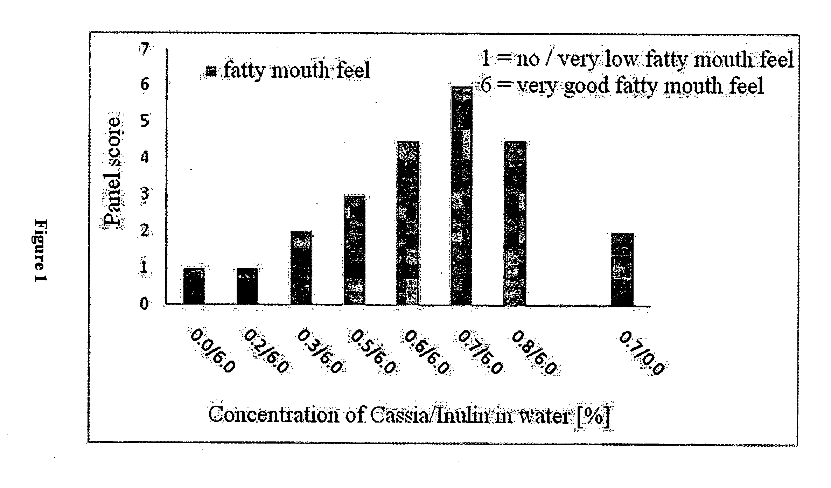

Figure 1 is a bar diagram showing results of different compositions containing water, Cassia gum and inulin with respect to mouth feel and texture.

### Terms and Definitions

As used here and throughout the specification the following terms have the meaning explained and defined below:

"Full mouth feel" describes the physical interaction of a food product with the mouth (oral cavity). A full mouth feel adds lubricity to the inner mouth surface and builds fullness (body) in the mouth without becoming pasty or pulpy. The intent of full mouth feel is the long lasting and melting effect of the food product in the mouth. The opposite of full mouth feel in this sense is a watery and thin appearance of the food product in the mouth. Due to the long lasting effect of a full mouth feel the recognition of tastes of the food product is strongly improved. Fat and oils fulfill this property and often convey a full mouth feel to a food product.

"Smooth texture" describes a texture of a food product, which is not grainy, does not contain inhomogeneous particles and which is not pulpy or pasty.

Throughout this description the terms fat replacer and fat substitute are used interchangeably.

Unless otherwise stated, all percentages, parts, and ratios expressed herein are based upon weight of the total compositions of the present invention.

### Summary of the Invention

The present invention relates to using a composition comprising inulin and cassia gum as a fat substitute. The composition improves mouth feel, body and smooth texture.

Alternative embodiments of the invention are apparent from the dependent claims.

### Detailed Description of the Invention

### Cassia Gum:

Cassia gum is known as a food additive under the European Community designation E 427. Concerning terms and definition it is referred to the Commission Directives of the European Union 2010/67/EU (L277/17) of 20 October 2010 and 2010/69/EU (L279/22) of 22 October 2010.

Cassia gum is a fine powder with a pale yellow to off-white color and a neutral taste and odor obtained from the ground and purified endosperm of Cassia tora and Cassia obtusifolia which, according to the present invention, can both be used alone or in combination. It hydrates by forming a colloid in hot water. Cassia gum has a synergistic gelling function in combination with xanthan gum and carrageenan. The loss of drying of the product is below 12 % and the content of polysaccharides is in the range of 75 % to 85 % of total dry matter. The pH of the product in water is between 5.5 and 8.0. Different blends of Cassia gum with salts, e.g., potassium chloride are commercially available. The corresponding total content of polysaccharides is reduced in those blends. An exemplary and commercially available Cassia gum is RheoRanger^{™} 300 from Lubrizol Advanced Materials Inc., Belgium.

Cassia gum is composed of 1→4-linked β-D-mannopyranosyl main chain units with recurring 1→6-linked α-D-galactosyl side groups branching from the number 6 carbon atom of a mannopyranose residue in the polymer backbone. In one embodiment of the invention, the average ratio of D-mannosyl to D-galactosyl units (M:G units) in the polygalactomannan contained in Cassia endosperm is at least 5:1. In another embodiment, the average ratio of M:G units ranges from 5:1 to 49:1 in one aspect, from 5:1 to 35:1 in another aspect, from 5:1 to 25:1 in still another aspect, from 5:1 to 10:1 in a further aspect, and 5:1, 6:1, 7:1, or 8:1 in other aspects of the invention. In another embodiment, the Cassia gum encompassing the M:G ratios set forth above is obtained from the endosperm of Cassia tora, Cassia obtusifolia, and mixtures thereof.

In another embodiment, the amount of galactose contained in the Cassia polygalactomannan is at least 2 wt.% based on the total amount of mannose and galactose present in the galactomannan. In one aspect, the amount of galactose ranges from 2 wt.% to 17 wt.%, in another aspect from 3 wt.% to 14 wt. %, in still another aspect from 4 wt.% to 13 wt.%, and in a further aspect from 5 wt.% to 11 wt.%, wherein all weights are based on the total amount of mannose and galactose present in the galactomannan. In another embodiment, the Cassia gum encompassing the galactose weight ranges set forth above is obtained from the endosperm of the seeds of Cassia tora, in an alternative embodiment from the endosperm of the seeds of Cassia obtusifolia, and in a still further embodiment from mixtures thereof.

The Cassia galactomannan used in the practice of this invention typically has a number average molecular weight (Mw) which is within the range of 100,000 to 1,500,000 Daltons. In many cases, the polygalactomannan has a number average molecular weight, which is within the range of 200,000 to 1,000,000 Daltons. It is common for the polygalactomannan used in the practice of this invention to have a number average molecular weight, which is within the range of 300,000 to 900,000 Daltons. The weight average molecular weights and number average molecular weights referenced herein can be determined by gel permeation chromatography (GPC) with refractive index and low angle light scattering detectors.

Typically, the Cassia gum used according to the present invention has a Brookfield viscosity of from 100 mPa·s or more to 500 mPa·s or less at 25 °C, in another embodiment from 150 mPa·s or more to 400 mPa·s or less, and in a still further embodiment from 200 mPa·s or more to 350 mPa·s or less.

In one embodiment, the Cassia gum used according to the present invention has a Brookfield viscosity of 400 mPa·s and a molecular weight of 500,000 to 900,000 g/mol.

In the present invention the amount of Cassia gum is referred to in terms of the active Cassia gum contained in Cassia gum compositions or blends which may contain further constituents such as starches, gums, organic or inorganic salts, for example such as potassium or sodium chloride, etc.. Commercially available Cassia gum compositions may contain from 40 % by weight or more to 100 % by weight or less, based on the total weight of the Cassia gum composition, of pure (active) Cassia gum. In another embodiment Cassia gum compositions may contain from 50 % by weight or more to about 80 % by weight or less, based on the total weight of the Cassia gum composition, of pure (active) Cassia gum. In still another embodiment Cassia gum compositions may contain from 55 % by weight or more to 75 % by weight or less, based on the total weight of the Cassia gum composition, of pure (active) Cassia gum.

The amount (weight percentage) of polygalactomannans in Cassia gum compositions is determined by the "gum by difference" method. This is an indirect method, based on the determination of moisture, crude protein, crude fats, crude fiber and crude ash which are the main by-components of commercially available Cassia gum. All of these components can be analyzed using conventional, state of the art methods. The resulting difference between the weight of the sample and the sum of the weights of by-products is assumed to represent the weight of the polygalactomannans in the Cassia gum compositions.

### Inulin:

Inulin is a white, odorless, soluble powder with a slightly sweet taste and no aftertaste. It is a water-soluble polydisperse carbohydrate composition consisting mainly, if not exclusively of β(1-2)fructosyl-fructose links. A starting glucose moiety can be present, but is not necessary. Typically, inulin is a mixture of oligomers and polymers.

Concerning a general description of the inulin for the purpose of the present invention, attention is drawn to the above background section.

Typically, inulin according to the present invention is a mixture of oligomers and polymers. The degree of polymerization (DP) and the presence of branches are important characteristics. Inulin of plant origin usually has a DP < 200 and a branching degree of 1 to 2 %.

Inulin-containing plants that are commonly used for human or animal nutrition belong mainly to Liliacea, e.g., leek, onion, garlic and asparagus, or the Compositae, e.g., Jerusalem artichoke, dahlia, chicory and yacon. In chicory inulin, the number of fructose units (DP) linked to a terminal glucose can vary from 2 to 70 or from 5 to 65, in an alternative embodiment from 15 to 60, in a still further embodiment from 23 to 50.

For the use as fat replacer inulin may have, in another embodiment should have an average polymerization degree of 10 or higher, in another embodiment 15 or higher, in still another embodiment 23 or higher.

Blends of different kinds of inulin that differ, for instance, in its polymerization degree, can be used.

An exemplary and commercially available inulin is ORAFTI^{®}HPX from Beneo Orafti, Belgium having the following characteristics: Inulin content 100 %, free glucose, fructose and sucrose 0 %, average DP (degree of polymerization) ≥23, sweetness 0 %. Chemical and structural analysis of inulin is described in detail in Franck and De Leenheer, Inulin, Wiley-VCH Verlag GmbH & Co KGaA, book chapter, pages 446 ff.

### Fat Replacer Composition:

Hereinafter and throughout the present description, the term "fat replacer composition onf the invention" is intended to refer to the composition that is used as a fat replacer according to the invention.

The fat replacer composition according to the invention comprises, or, in another embodiment of the invention, consists of inulin and Cassia gum. In one embodiment the fat replacer formulation according to the invention may further contain ingredients and additives selected from the group consisting of starches, gums, inorganic salts, organic salts and mixtures thereof. The fat replacer composition may comprise water, i.e. may be aqueous.

The weight ratio of (active) Cassia gum to inulin in the fat replacer composition of the present invention is between 1:5 and 1:15. In another embodiment the ratio may be between 1:6 and 1:12, in still another embodiment between 1:7 and 1:10 and in a still further embodiment between 1:8 and 1:9.

The fat replacer composition according to the present invention comprises a total amount of inulin and Cassia gum of from 0.01 % by weight or more to 100 % by weight or less, based on the total weight of the fat replacer composition. In another embodiment the fat replacer composition comprises a total amount of inulin and Cassia gum of from 1 % by weight or more to 90 % by weight or less, based on the total weight of the fat replacer composition. In still another embodiment the fat replacer composition comprises a total amount of inulin and Cassia gum of from 10 % by weight or more to 80 % by weight or less, based on the total weight of the fat replacer composition. In a still further embodiment the fat replacer composition comprises a total amount of inulin and Cassia gum of from 20 % by weight or more to 70 % by weight or less, based on the total weight of the fat replacer composition. In a still further embodiment the fat replacer composition comprises a total amount of inulin and Cassia gum of from 30 % by weight or more to 60 % by weight or less, based on the total weight of the fat replacer composition. In a still further embodiment the fat replacer composition comprises a total amount of inulin and Cassia gum of from 40 % by weight or more to 50 % by weight or less, based on the total weight of the fat replacer composition.

### Compounding:

The fat replacer composition according to the invention can be pre-formulated in the presence or absence of water or, alternatively, depending on the food product to be prepared, the constituents (inulin, Cassia gum, and optional additives and ingredients) can be added to the food, fodder or beverage composition separately in predetermined amounts and processed together with the other food/fodder constituents to obtain the final fat reduced food, fodder or beverage product.

### Fat Reduced Food, Fodder and Beverage Products:

The fat reduced compositions can be food, fodder and beverage compositions for humans and animals. Fat reduced food, fodder and beverage compositions of the present invention which may contain the fat replacer according to the present invention are, for instance, selected from processed cheese products such as spreadable processed cheeses, cream cheeses, and reconstituted cheeses; yoghurt products such as spoonable yoghurt; dairy based beverages such as drinkable yoghurts; processed meat products such as sausages, ham products, and pates; ice cream products such as frozen yoghurt, impulse ice cream, take home ice cream, extruded ice cream, moulded ice cream, ice lollies, sherbets, and sorbets; other dessert products; confectionary such as chocolate confectionary, gum, and sugar confectionary; margarine products; spreadable oils or fats; and fine food products such as sauces, mayonnaises, dips, and dressings.

The amount of the fat replacer in the final fat reduced product varies depending on the food to be reduced in fat. The amount of fat replacer is not necessarily identical or similar to the amount of fat which is to be replaced or partially replaced in the original food, fodder or beverage product. Depending on the food product to be prepared and/or to be reduced in fat routine taste testing (degustation) may be necessary in order find out the optimum mouth feel, texture and taste.

The food, fodder or beverage composition according to the disclosure may comprise a total amount of inulin and Cassia gum of from 0.01 % by weight to 20 % by weight, based on the total weight of the food, fodder or beverage composition. The food, fodder or beverage composition according to the disclosure may comprise a total amount of inulin and Cassia gum of from 0.05 % by weight to 10 % by weight, based on the total weight of the food, fodder or beverage composition. The food, fodder or beverage composition according to the disclosure may comprise a total amount of inulin and Cassia gum of from 0.1 % by weight to 5 % by weight, based on the total weight of the food, fodder or beverage composition. The food, fodder or beverage composition according to the disclosure may comprise a total amount of inulin and Cassia gum of from 0.2 % by weight to 2 % by weight, based on the total weight of the food, fodder or beverage composition. The food, fodder or beverage composition according to the disclosure may comprise a total amount of inulin and Cassia gum of from 0.3 % by weight to 1 % by weight, based on the total weight of the food, fodder or beverage composition.

### Additives and Ingredients

Fat reduced food compositions of the present disclosure may further comprise additives and ingredients which are selected from the group consisting of thickeners and hydrocolloids other than Cassia gum; proteins such as egg albumin, gelatin, collagen, dry and milk proteins, vegetable proteins, fats and oils of animal or plant origin, cooked and uncooked vegetables; structuring agents such as dietary fibers, salts, emulsifiers, preservatives, pH-regulators, and acidifiers; flavoring agents such as flavor enhancing agents, spices, spice extracts, sweetening agents and smoke; coloring agents; vitamins; antioxidants; curing agents; and combinations thereof, depending on the final end use of the fat replacer composition. Water and/or broth (derived e.g. from vegetables) may be added as needed.

The following description provides an overview on the functional properties of the mentioned food additives.

Thickeners and hydrocolloids can be added to the fat reduced food composition in order to improve the water binding capacity, the viscosity or the firmness of such products. Depending on the composition of the food product, thickeners can help to stabilize the structure of the final product and to improve the mouth feel and sensation of the final product. Typical thickeners are selected from the group consisting of starches, carrageenans, celluloses, fibers and other polysaccharides. These polysaccharides can be physically or chemically modified. Individual thickeners are used, alone or in combination, depending on the composition of the food product, in the range of 0.1 g to 50 g per kg final product.

Proteins can be added to the fat reduced food composition in order to improve the protein/water/fat ratio of the final product. Proteins have the ability to improve the structure of the food product, to support or to stabilize the emulsification process and to bind added water or fat also at high temperatures. Typical proteins are selected from the group consisting of collagens, milk proteins and vegetable proteins such as pea protein or soy protein. The quantity of added proteins in food products may vary between 1 g and 700 g/kg final product.

Fats and oils of animal or plant origin can be added to the food product composition in order to standardize the content of fat in such product and to enhance or to modify the taste and smell. Typical fats and oils of animal or plant origin are selected from the group consisting of meat fat or vegetable oil such as sunflower oil or palm fat and palm oil. Depending on the final consistency or price level of the final product animal fat or vegetable oil is used in the range of 1 g to 150 g per kg of the final product.

Salts can be added to the fat reduced food compositions in order to modify the ionic strength of the food compositions to modify the water binding capacity of the final product. Another functionality of salt is the modification of the taste of the final product. Salts have a natural taste and are able to improve the taste of ingredients of food product composition. Typical salts are selected from the group consisting of sodium chloride, potassium chloride or calcium chloride or different phosphates such as diphosphates, triphosphates or polyphosphates. Quantities of salts are typically between 1 and 45 g / kg of the final product.

Emulsifiers can be added to the fat reduced food composition in order to emulsify the fatty and watery phase of the food product. Emulsions have to be stabilized especially during shearing and heating processes. Typical emulsifiers are selected from the group consisting of mono- and diglycerides of fatty acids and organic acid esters of mono-and diglycerides of fatty acids. Typical dosages of emulsifiers are from 1 g to 10 g depending on the composition of the fat reduced food product with respect to the ratio of fat, protein and water.

Preservatives can be added to the fat reduced food composition in order to increase the shelf life of such a product and to protect the product from microbial growth. Typical preservatives are selected from the group consisting of sodium nitrite, potassium sorbate, sodium benzoate and natural organic acids.

Cooked and uncooked vegetables can be added to the fat reduced food composition in order to modify the texture or the taste or the smell of such a product. Vegetables are commonly used in sausages or fat replacers to improve the appearance of such a product. Typical vegetables are selected from the group consisting of paprika, onion or cucumber or non-milled herbs.

Flavoring agents can be added to the fat reduced food composition in order to improve the taste of such a product. Typical flavoring agents are selected from the group consisting of aromas, spices and spice extracts, which improve the typical taste of the corresponding food product. Flavoring agents can also be used to mask unpleasant tastes of added ingredients or parts of the fat reduced food product. Typical dosages of flavoring agents are between 0.1 g and 10 g of final products, depending on the content of protein and fat in the product.

Flavor enhancing agents can be added to the fat reduced food composition in order to enhance the taste of the corresponding food product. Taste enhancement is characterized by the improvement of the natural flavor. Typical flavor enhancing agents are selected from the group consisting of mono sodium glutamate, ribonucleotides and salts.

Aromas can be added to the fat reduced food composition in order to improve the natural taste of the product or to adapt or to mask a certain taste of the product. Typical aromas are selected from the group consisting of milky or meaty aromas, spice aromas, vegetable aromas. Aromas can be artificial or natural, depending on the source of the raw material or the used production process.

Antioxidants can be added to the fat reduced food composition in order to inhibit oxidation reactions e.g. to fats and to stabilize the color of food products. Therefore antioxidants are able to stabilize the taste and color of a food product. Typical antioxidants are selected from the group consisting of ascorbic acid, sodium ascorbate or tocopherol and their corresponding fatty acid or organic acid esters.

pH Regulators can be added to the fat reduced food composition in order to adjust or to stabilize the pH value of the composition to a desired value or range. Typically, the pH value of the fat replacer composition may be from 4 to 8 in another embodiment from 5 or from 6 to 7. Typical pH regulators are selected from the group consisting of phosphates and organic acids.

Sweetening agents can be added to the fat reduced food composition in order to improve the sweetness of such a product or to mask/cover unpleasant tastes or to improve or to mask/cover the taste of other ingredients of the food product. Typical sweetening agents are selected from the group consisting of sugars and or dextroses, artificial sweeteners such as aspartame or protein based sweeteners such as thaumatine or glycine. Dosages can vary over a broad range, depending on the sweetener system used. Dextrose, for example, can be added to the food composition in quantities from 1 g to 20 g per kg of the fat reduced food composition.

Vitamins can be added to the fat reduced food composition in order to improve the nutritional value of the final product or to stabilize the food composition, e.g. if vitamin C or vitamin E is used. Typical vitamins are selected from the group consisting of vitamin C, vitamin E or vitamin B. Typical quantities of vitamins depend on the used food product, the fat content of the final product and the color of the final product. A red product should contain a significant quantity of vitamin C. Those quantities are in the range of 0.5 g to 5 g per kg of the final product.

Colorants can be added to the fat reduced food composition in order to modify, improve or to stabilize the color of a food product. Depending on the composition of the food product colorants can be used in a broad range of concentrations. Typical colorants are selected from the group consisting of natural (vegetable) extracts or artificial, chemically synthesized or modified colorants.

Smoke agents can be added to the fat reduced food composition in order to protect the product from microbial growth and to add a typical smoky taste and smell to such a food product. The major function of smoke is the preservative property. Typical smoke agents are selected from the group consisting of natural wood smokes.

The total amount of additives such as those mentioned above in the fat reduced food composition is up to 70 % by weight, in one embodiment from 5 % by weight to 50 % by weight, in another embodiment from 10 % by weight to 30 % by weight of the total weight of the food composition.

### Summery of Advantages and Industrial Applicability of the Invention

In order to obtain a very good mouth feel, a very full body and a very smooth texture in fat reduced food products like cream cheese preparations, spreadable meat products or milk based beverages, it is necessary to use a fat replacing agent or a combination of different fat replacing agents. Existing systems, like the combination of inulin and citrus fiber, or inulin and viscosity modifying gums, like carrageenan, Locust Bean gum or Guar gum, which are used industrially today, have the disadvantage, that the mouth feel of those products is either not full enough or too pulpy or pasty and that the body of the product is too low and/or that the texture is grainy and not smooth. The new combination of inulin and Cassia gum is able to overcome these problems as it develops a full mouth feel and smooth texture without becoming pulpy, pasty or gelated. It is possible to produce a smooth, non-grainy texture by using Cassia gum and inulin as fat substituting preparation.

The following examples are for illustrative purposes. It is to be understood that the invention may be carried out on different equipment and devices and that various modifications, both as to the starting materials, equipment details and operating procedures may be accomplished.

### Examples

If not otherwise stated herein all amounts are based on weight and all percentages represent weight percentages.

### Methods and Measurements:

### Determination of the Brookfield Viscosity:

Typically, the Cassia gum according to the present invention has a Brookfield viscosity of below 400 mPa·s at 25 °C. For testing the Brookfield viscosity 5 g of the Cassia sample is added to 495 g of distilled water at 20 °C in a 1000 ml beaker while stirring using a magnetic bar on an agitation plate. The speed of agitation is 750 rpm. The beaker is covered with a watch glass and the temperature is kept at 90 °C for 15 min. The solution is subsequently cooled to 25 °C in a water bath and the viscosity after 2 h at 25 °C is determined using a RVT Brookfield spindle 1, speed 20 rpm.

### Molecular Weight:

For dissolution of each gum sample, 250 mg of gum is weighed and dispersed into 50 ml of DI water. This slurry/solution is then de-gassed by bubbling nitrogen gas through the mixture for 30 minutes followed by refluxing at 115 °C for 2 hours. The sample is then cooled to 0 °C at which time 1.5 g of NaOH and 1.0 g urea are added with stirring. Once all of the components are dissolved, the sample is placed in a freezer at -12 °C and frozen solid overnight. The following day the sample is warmed to room temperature in a water bath and is fully thawed. It is then placed back into the freezer and frozen solid overnight. Each sample is subjected to a total of 3 freeze/thaw cycles before being neutralized to pH 7 with approx. 2.2 mL of glacial acetic acid. This process renders fully soluble viscous solutions. The weight average molecular weights and number average molecular weights referenced herein are measured by refractive index and low angle light scattering detectors at room temperature using a 2 x PLaquagel OH-Mixed-H 8 µm 300 x 7.5 mm column at a concentration of approximately 0.9 mg/mL in a buffer solution of 0.2 M NaNO₃, 0.01 M NaH₂PO₄ at pH 7 as the eluent at a flow rate of 1 mL/min. (Each sample was pre-filtered through a 0.5 µm syringe filter.) The detectors employed are a PL-GPC 50 Plus Refractive Index Detector with a PD 2020 Light Scattering Detector. PL-Cirrus software is used to analyze the results and to calculate Mₙ and M_{w} of the polygalactomannan.

### Determination of the polygalactomannan content of Cassia/Guar/Locust Bean gum:

The amount (weight percentage) of polygalactomannans is determined by the "gum by difference" method. This is an indirect method, based on the determination of moisture, crude protein, crude fats, crude fiber and crude ash which are the main by-components of commercially available Cassia/Guar gum. All of these components can be analyzed using conventional, state of the art methods. The resulting difference between the weight of the sample and the sum of the weights of by-products is assumed represent the weight of the polygalactomannans.

### Determination of "full mouth feel", "body" and "smoothness":

Full mouth feel, body and smooth texture were determined by degustation by a panel of trained persons. The full mouth feel was determined on basis of DIN 10950-1 and DIN 10950-2 and corresponding DIN standards within cited methods as well based on M. Busch-Stockfisch in "Praxishandbuch Sensorik in der Produktentwicklung und Qualitätssicherung", Behr's Verlag, 2007, ISBN 978-3-8602-2958-3.

Full mouth feel describes the physical interaction of a food product with the mouth (oral cavity). A full mouth feel adds lubricity to the inner mouth surface and builds fullness (body) in the mouth without becoming pasty or pulpy. The intent of full mouth feel is the long lasting and melting effect of the food product in the mouth. The opposite of full mouth feel in this sense is a watery and thin appearance of the food product in the mouth. Due to the long lasting effect of a full mouth feel the recognition of tastes of the food product is strongly improved. Fat and oils fulfill this requirement and often impart a full mouth feel on a food product. Smoothness describes the texture of a food product. A food product is considered smooth if it is not grainy and does not contain inhomogeneous particles and is not pulpy or pasty.

For the purpose of describing the results achieved by this invention the scoring for testing full mouth feel, body and smoothness has been chosen to range from +1 = no full mouth feel, watery to +6 = very full mouth feel, very good body and smooth texture, like milk cream. A scoring of +1 can be compared to the mouth feel which occurs during drinking water. A score of +6 can be compared to the mouth feel and smoothness which occurs during eating/drinking, e.g., milk cream. For testing the mouth fullness and body of products, at least 5 trained persons test the products. The level of mouth fullness has been scored as follows by each individual panelist:
- 1: = no or only very slight mouth feel, watery
- 2: = slight lubricity
- 3: = perceptible lubricity
- 4: = improved mouth feel
- 5: = good mouth feel, good body, smooth texture
- 6: = very good mouth feel, very good body, smooth texture, like cream

### Materials

The materials used for the present invention are all commercially available or available from the local market such as skimmed curd, skimmed milk, cream (30 % fat), fresh cheese (skimmed) and NaCl (all in food quality).

Cassia gum has been obtained as RheoRanger^{™} 300 from Lubrizol Advanced Materials Inc., Belgium. The commercial product contains approximately 100 % by weight of active Cassia gum. The content of polygalactomannan in the active Cassia Gum determined by the above described "gum by difference" method is about 75%. The product has been described in detail above. The Brookfield viscosity of this Cassia gum, determined according to the measurement method described above, is 400 mPa·s. The number average molecular weight, determined according to the measurement method described above, is 300.000 - 900.000 Daltons.

Inulin has been obtained as Orafti® HPX from Beneo Orafti, Belgium, DP ≥ 23, 100 % inulin.

Guar Gum has been obtained as Vidogum GH 175 from Unipektin, Switzerland. The Brookfield viscosity of Guar gum, determined according to the measurement method described above, is 3500 mPa s. The galactomannan content was determined to be 75 %, the water content was less than 13 % and the pH value was in the range of 4.5 to 6.7.

Carrageenan has been obtained as CGN WR-78 from CP Kelco, United Kingdom. The pH value (0.5 % solution) is about 7.0 to about 10.0, loss of drying is 12.0 % and the gel strength index is about 90 to about 110.

Locust Bean gum (LBG) has been obtained from Unipektin, Switzerland. The content of galactomannan is approximately 75 %, the water content is below 13.5 % and the ash content is below 1.2 %.

Sodium Caseinate has been obtained from Lactoprot Deutschland GmbH, Kaltenkirchen, Germany. The protein content of this product is > 88 % and the loss of drying is less than 5 %.

KCl has been obtained from VWR, Germany.

Skimmed milk powder has been obtained from Rovita GmbH, Germany.

Citrus fiber has been obtained from Herbafood Ingredients GmbH, Germany.

Citric Acid has been obtained from Lohmann GmbH, Germany.

If not stated otherwise, the materials have been used as received. The amount of Cassia gum, carrageenan or other hydrocolloids is referred to in terms of the active amount of Cassia gum and carrageenan or the respective hydrocolloid contained in the commercially available compositions which may contain further constituents.

The following recipe and method as described below has been used to produce a fat replacer for use in fat reduced food products as described in this invention.

### Example 1

### Synergistic Effect of Cassia Gum and Inulin

**Table 1.**

| **Compostion No.** | **1 (comparative) (g)** | **2 (invention) (g)** | **3 (comparative) (g)** | **4 (comparative) (g)** |
|---|---|---|---|---|
| Inulin | 30 | 30 | - | 30 |
| Cassia gum | -- | 3.5 | 3.5 | -- |
| Guar gum | -- | -- | -- | 3.5 |
| Ratio Cassia/Guar to inulin | 1:0 | 1:9 | 0:1 | 1:9 |
| Water | 470 | 466.5 | 496.5 | 466.5 |
| Total | 500 | 500 | 500 | 500 |

The ingredients in the amounts stated in Table 1 were thoroughly mixed (Thermomix® by Vorwerk, Germany). The mixture was then heated to 90 °C for 5 min under continued mixing. The mixture was then homogenized in a high pressure homogenizer at 150 bar and 60 °C. Afterwards, the mouth feel and texture of the resulting homogeneous mixtures were determined and compared by degustation at ambient temperature (20°C).

**Table 2.**

| **No.** | **Composition** | **Texture** |
|---|---|---|
| 1 | Inulin | slight increase of viscosity, no fatty mouth feel |
| 2 | Cassia gum + inulin | fatty mouth feel, very smooth texture |
| 3 | Cassia gum | slight increase of viscosity, no fatty mouth feel |
| 4 | Guar gum + inulin | strongly increased viscosity, non fluent, slimy, pulpy mouth feel |

The results set forth in Table 2 demonstrate that there is a strong synergistic effect of using both Cassia gum and inulin in combination. The mouth feel is strongly improved and the texture appears very smooth while the viscosity of the solution is only slightly increased. It is evident that compositions comprising Cassia gum alone, inulin alone as well as Guar gum in combination with inulin do not develop such a fatty mouth feel. For Guar gum, the viscosity is so high, that a pulpy and slimy consistency occurs. A liquid fat replacer, with a very good and full mouth feel, which is comparable to that of vegetable oil, fat or butter cream has been produced.

### Example 2

### Influence of the Ratio Cassia Gum to Inulin

According to the method in Example 1 different compositions containing water, Cassia gum and inulin have been tested for their mouth fullness and texture. As apparent from the results shown in Figure 1 the optimum ratio of Cassia gum to inulin in a pure water system is 0.7 % to 6.0 %. However, compositions comprising the ratios of 0.5 % to 6.0 %, 0.6 % to 6.0 %, 0.8 % to 6.0 % Cassia gum to inulin also lead to a sufficiently smooth and fat-like texture. These water based compositions can easily be used as a substitute for fat and oil depending on the food system or beverage.

### Example 3

### Fat-Reduced Cream Cheese Product

The fat replacer containing inulin and Cassia gum has been tested in a cream cheese preparation having a fat content of 0.2 % (Experiment 2) and compared to a standard cream cheese product with a fat content of 16 % (Experiment 1), a state of the art low fat cream cheese preparation containing inulin and citrus fiber (Experiment 3), a control experiment containing neither fat nor a fat substitute (Experiment 4) and a low fat cream cheese preparation containing inulin and guar gum (Experiment 5). Following the recommendations of the commercial suppliers an optimum ratio of inulin to citrus fiber of 1:1 has been applied regarding the state of the art Experiment 3 in order to achieve the best possible result with respect to the fat reduced product.

The following procedure was applied to recipes shown in Table 3.

Salts, inulin, citrus fiber (or Cassia gum, respectively), hydrocolloids and water were mixed at slow speed in a mixer (Thermomix® by Vorwerk, Germany) while the temperature is increased to 90 °C. Sodium caseinate was added and mixing at 90. °C is continued for 5 minutes. The mixture was then cooled to 60 °C and pre-heated fresh cheese and cream were slowly added. The mixing of the blend was continued for 2 minutes and the whole mixture was homogenized with a Niro Soavi high-pressure homogenizer (model NS 1001L 2K PANDA) at a pressure of 600 bar. Thereafter the product was poured into beakers and kept under refrigeration at 4 °C.

**Table 3. Cream Cheese Compositions**

| **Experiment No.** | **1 (standard)** | **2 (invention)** | **3 (state of the art)** | **4 (control)** | **5 (comparative)** |
|---|---|---|---|---|---|
| Fresh cheese skimmed | 400.00 | 830.00 | 830.00 | 830.00 | 830.00 |
| Cream (30% fat) | 500.00 | --- | --- | --- | --- |
| Sodium Caseinate | 51.50 | 26.50 | 26.50 | 26.50 | 26.50 |
| Citric Acid | 1.40 | 1.40 | 1.40 | 1.40 | 1.40 |
| NaCl | 7.10 | 7.10 | 7.10 | 7.10 | 7.10 |
| KCl | 2.70 | 2.70 | 2.70 | 2.70 | 2.70 |
| Inulin | --- | 23.00 | 23.00 | --- | 23.00 |
| Cassia gum | --- | 2.50 | --- | --- | --- |
| Guar gum | --- | --- | --- | --- | 2.50 |
| Locust Bean gum | 3.00 | 3.00 | 3.00 | 3.00 | 3.00 |
| Carrageenan | 1.50 | 1.50 | 1.50 | 1.50 | 1.50 |
| Citrus fiber | - | - | 23.00 | - | - |
| Water | 32.80 | 102.30 | 81.80 | 127.80 | 102.30 |
| Total | 1000.00 | 1000.00 | 1000.00 | 1000.00 | 1000.00 |
| Protein content | 11.0% | 11.0% | 11.0% | 11.0% | 11.0% |
| Fat content | 16.8% | 0.2% | 0.2% | 0.2% | 0.2% |
| Ratio Cassia/Guar/ citrus fiber to inulin | --- | 1:9 | 1:1 | --- | 1:9 |
| **Panel score (mouth feel)** | **6** | **6** | **2** | **1** | **3** |

**Table 4. Texture of the Cream Cheese Compositions**

| **Sample** | **Composition** | **Texture** |
|---|---|---|
| 1 | Milk fat (standard) | Very good and full mouth feel, very smooth texture |
| 2 | Inulin + Cassia gum | Very good and full mouth feel, very smooth texture |
| 3 | Inulin + citrus fiber | Slight lubricity, non- smooth, grainy texture |
| 4 | Control | No mouth feel, watery, not smooth |
| 5 | Inulin + Guar gum | Improved lubricity, slimy, slightly pulpy |

These results set forth in Table 4 show that the mouth feel is strongly improved and the texture appears very smooth if Cassia gum and inulin are used as fat substituting substances. The combination of citrus fiber and inulin is only able to develop a slight lubricity and the texture is not smooth but grainy. The combination of inulin and Guar gum leads to a slimy product, typical for Guar gum.

### Example 4

### Fat-reduced chicken pate/spread product

The fat replacer containing inulin and Cassia gum has been tested in a chicken paté preparation having a 50 % reduced fat content and compared to a full fat standard chicken pate product with vegetable oil and chicken fat and a 50 % reduced fat chicken pate product containing inulin and Guar gum.

Following procedure was applied to recipes shown in Table 5.

To prepare the chicken pate compositions, 140 g water was mixed at slow speed with inulin and Cassia gum (or citrus fiber, respectively) and slowly heated to 90 °C. Afterwards, the salt and nitrite curing salt were added to small pieces of chicken meat, fat and vegetable oil (fat substitute, respectively) and then boiled in a water bath at 80 °C until the meat was coagulated. The meat, fat (or fat substitute, respectively) and any other additive were added to a Stephan cutter. The whole mass was cut at maximum speed. After receiving a homogenous mass, it was filled into glasses. Afterwards, the glasses were cooked at 120 °C for 20 °C. After 24 h of cooling at 4 °C the product was tested by panel testing.

**Table 5. Chicken Paté Composition**

| **Ingredient** | **Experiment 5 (standard, full fat)** | **Experiment 6 (invention, half fat)** | **Experiment 7^{[a]} (state of the art, half fat)** |
|---|---|---|---|
| Nitrite curing salt | 16.00 | 16.00 | 16.00 |
| Spice blend | 25.20 | 25.20 | 25.20 |
| Cassia gum | --- | 1.50 | --- |
| Inulin | --- | 9.00 | 9.00 |
| Citrus Fiber | --- | --- | 9.00 |
| Sodium Caseinate | 10.00 | 10.00 | 10.00 |
| Chicken meat | 450.00 | 450.00 | 450.00 |
| Water/ice | 250.50 | 390.00 | 381.00 |
| Vegetable oil | 150.00 | 75.00 | 75.00 |
| Chicken fat | 150.00 | 75.00 | 75.00 |
| Ratio Cassia/Guar/citrus fiber to inulin | --- | 1:6 | 1:1 |
| Total | 1051.70 | 1051.70 | 1051.70 |

| | | | |
|---|---|---|---|
| [a] Following the recommendations of the commercial suppliers an optimum ratio of inulin to citrus fiber of 1:1 has been applied in order to achieve the best possible result with respect to the fat reduced product. | | | |

**Table 6. Texture of Chicken Paté Compositions**

| **Sample** | **Composition** | **Texture** |
|---|---|---|
| 1 | Full fat (standard) | Very good and full mouth feel, very smooth texture |
| 2 | Inulin + Cassia gum | Very good and full mouth feel, very smooth texture |
| 3 | Inulin + citrus fiber | slight lubricity, non- smooth, grainy texture |

The results set forth in Table 6 show that the mouth feel is strongly improved and the texture appears very smooth if Cassia gum and inulin are used as fat substituting substances. The combination of citrus fiber and inulin is only able to develop a slight lubricity and the texture is not smooth but grainy.

## Claims

1. Use of a composition comprising inulin and Cassia gum as a fat replacer in food, fodder or beverage compositions, wherein the composition has a weight ratio of Cassia gun to inulin of from 1:15 to 1:5.

2. The use of claim 1, wherein the composition consists of inulin and Cassia gum.

3. The use of claim 1, wherein the composition comprises a total amount of inulin and Cassia gum of from 0.01 % by weight or more to 100 % by weight or less, based on the total weight of the fat replacer composition, or
comprising a total amount of inulin and Cassia gum of from 1 % by weight or more to 90 % by weight or less, based on the total weight of the fat replacer composition, or
comprising a total amount of inulin and Cassia gum of from 10 % by weight or more to 80 % by weight or less, based on the total weight of the fat replacer composition.

4. The use of any one of the preceding claims, wherein the composition has
a weight ratio of Cassia gum to inulin of from 1:12 to 1:6, or
a weight ratio of Cassia gum to inulin of from 1:10 to 1:7, or
a weight ratio of Cassia gum to inulin of from 1:9 to 1:8.

5. The use of any one of the preceding claims, wherein the weight average molecular weight of Cassia gum is within the range of 100,000 Daltons or more to 1,500,000 Daltons
or less, or
wherein the weight average molecular weight of Cassia gum is within the range of 200,000 Daltons or more to 1,000,000 Daltons or less, or
wherein the weight average molecular weight of Cassia gum is within the range of 300,000 Daltons or more to 900,000 Daltons or less.

6. The use of any one of the preceding claims, wherein the Brookfield viscosity of Cassia gum is from 100 mPa·s or more to 500 mPa·s or less at 25 °C, or
wherein the Brookfield viscosity of Cassia gum is from 150 mPa·s or more to 400 mPa·s or less at 25 °C, or
wherein the Brookfield viscosity of Cassia gum is from 200 mPa·s or more to 350 mPa·s or less at 25 °C.

7. The use of any one of the preceding claims, wherein the polymerization degree of inulin is between 15 or more and 70 or less, or wherein the polymerization degree of inulin is between 23 or more and 70 or less.

8. The use of any one of the preceding claims, wherein the food, fodder or beverage composition comprises a total amount of Cassia gum and inulin of from 0.01 % by weight or more to 20 % by weight or less, based on the total weight of the food, fodder or beverage composition, or
comprising a total amount of Cassia gum and inulin of from 0.05 % by weight or more to 10 % by weight or less, based on the total weight of the food, fodder or beverage composition, or
comprising a total amount of Cassia gum and inulin of from 0.1 % by weight or more to 5 % by weight or less, based on the total weight of the food, fodder or beverage composition, or
comprising a total amount of Cassia gum and inulin of from 0.2 % by weight or more to 2 % by weight or less, based on the total weight of the food, fodder or beverage composition, or
comprising a total amount of Cassia gum and inulin of from 0.3 % by weight or more to 1 % by weight or less, based on the total weight of the food, fodder or beverage composition.

9. The use of claim 8, wherein the food or fodder composition is a processed cheese product, a yoghurt product, a processed meat product, an ice-cream product, a dessert product, a margarine product, a spreadable oil or fat, a fine food product or a dairy based beverage.

10. The use of claim 8, wherein the the food, fodder or beverage composition is obtainable by a method comprising the steps of:
(i) providing the fat replacer composition as defined in any one of claims 1 to 7 and optional additives and ingredients,
(ii) blending the mixture, and
(iii) treating the mixture by heat.

11. The use of claim 10, wherein the total amount of added Cassia gum and inulin in the fat replacer is from 0.01 % by weight or more to 20 % by weight or more, based on the total weight of the food, fodder or beverage composition.

12. The use of any one of the preceding claims for improving the mouth feel and texture of food, fodder and beverage compositions

## Patentansprüche

1. Verwendung einer Zusammensetzung, die Inulin und Cassiakernmehl als Fettersatzstoff in Lebensmittel-, Futter- oder Getränkezusammensetzungen umfasst, wobei die Zusammensetzung ein Gewichtsverhältnis von Cassiakernmehl zu Inulin von 1:15 bis 1:5 aufweist.

2. Verwendung gemäß Anspruch 1, wobei die Zusammensetzung aus Inulin und Cassiakernmehl besteht.

3. Verwendung gemäß Anspruch 1, wobei die Zusammensetzung eine Gesamtmenge an Inulin und Cassiakernmehl von 0,01 Gew.-% oder mehr bis 100 Gew.-% oder weniger umfasst, bezogen auf das Gesamtgewicht der Fettersatzstoffzusammensetzung; oder
eine Gesamtmenge an Inulin und Cassiakernmehl von 1 Gew.-% oder mehr bis 90 Gew.-% oder weniger umfasst, bezogen auf das Gesamtgewicht der Fettersatzstoffzusammensetzung; oder
eine Gesamtmenge an Inulin und Cassiakernmehl von 10 Gew.-% oder mehr bis 80 Gew.-% oder weniger umfasst, bezogen auf das Gesamtgewicht der Fettersatzstoffzusammensetzung.

4. Verwendung gemäß einem der vorstehenden Ansprüche, wobei die Zusammensetzung
ein Gewichtsverhältnis von Cassiakernmehl zu Inulin von 1:12 bis 1:6 oder
ein Gewichtsverhältnis von Cassiakernmehl zu Inulin von 1:10 bis 1:7 oder
ein Gewichtsverhältnis von Cassiakernmehl zu Inulin von 1:9 bis 1:8
aufweist.

5. Verwendung gemäß einem der vorstehenden Ansprüche, wobei das Gewichtsmittel des Molekulargewichts von Cassiakernmehl im Bereich von 100 000 Dalton oder mehr bis 1 500 000 Dalton oder weniger liegt oder
wobei das Gewichtsmittel des Molekulargewichts von Cassiakernmehl im Bereich von 200 000 Dalton oder mehr bis 1000 000 Dalton oder weniger liegt oder
wobei das Gewichtsmittel des Molekulargewichts von Cassiakernmehl im Bereich von 300 000 Dalton oder mehr bis 900 000 Dalton oder weniger liegt.

6. Verwendung gemäß einem der vorstehenden Ansprüche, wobei die Brookfield-Viskosität des Cassiakernmehls bei 25 °C 100 mPa·s oder mehr bis 500 mPa·s oder weniger beträgt oder
wobei die Brookfield-Viskosität des Cassiakernmehls bei 25 °C 150 mPa·s oder mehr bis 400 mPa·s oder weniger beträgt oder
wobei die Brookfield-Viskosität des Cassiakernmehls bei 25 °C 200 mPa·s oder mehr bis 350 mPa·s oder weniger beträgt.

7. Verwendung gemäß einem der vorstehenden Ansprüche, wobei der Polymerisationsgrad des Inulins zwischen 15 oder mehr und 70 oder weniger liegt oder wobei der Polymerisationsgrad des Inulins zwischen 23 oder mehr und 70 oder weniger liegt.

8. Verwendung gemäß einem der vorstehenden Ansprüche, wobei die Lebensmittel-, Futter- oder Getränkezusammensetzung eine Gesamtmenge an Cassiakernmehl und Inulin von 0,01 Gew.-% oder mehr bis 20 Gew.-% oder weniger umfasst, bezogen auf das Gesamtgewicht der Lebensmittel-, Futter- oder Getränkezusammensetzung, oder
eine Gesamtmenge an Cassiakernmehl und Inulin von 0,05 Gew.-% oder mehr bis 10 Gew.-% oder weniger umfasst, bezogen auf das Gesamtgewicht der Lebensmittel-, Futter- oder Getränkezusammensetzung, oder
eine Gesamtmenge an Cassiakernmehl und Inulin von 0,1 Gew.-% oder mehr bis 5 Gew.-% oder weniger umfasst, bezogen auf das Gesamtgewicht der Lebensmittel-, Futter- oder Getränkezusammensetzung, oder
eine Gesamtmenge an Cassiakernmehl und Inulin von 0,2 Gew.-% oder mehr bis 2 Gew.-% oder weniger umfasst, bezogen auf das Gesamtgewicht der Lebensmittel-, Futter- oder Getränkezusammensetzung, oder
eine Gesamtmenge an Cassiakernmehl und Inulin von 0,3 Gew.-% oder mehr bis 1 Gew.-% oder weniger umfasst, bezogen auf das Gesamtgewicht der Lebensmittel-, Futter- oder Getränkezusammensetzung.

9. Verwendung gemäß Anspruch 8, wobei die Lebensmittel- oder Futterzusammensetzung ein verarbeitetes Käseprodukt, ein Joghurtprodukt, ein verarbeitetes Fleischprodukt, ein Eiscremeprodukt, ein Dessertprodukt, ein Margarineprodukt, ein streichfähiges Öl oder Fett, ein Feinkostprodukt oder ein Getränk auf Milchbasis ist.

10. Verwendung gemäß Anspruch 8, wobei die Lebensmittel-, Futter- oder Getränkezusammensetzung nach einem Verfahren erhältlich ist, das die folgenden Schritte umfasst:
(i) Bereitstellen der Fettersatzstoffzusammensetzung gemäß einem der Ansprüche 1 bis 7 und gegebenenfalls Additiven und Bestandteilen;
(ii) Durchmischen des Gemischs; und
(iii) Behandeln des Gemischs durch Wärme.

11. Verwendung gemäß Anspruch 10, wobei die Gesamtmenge des hinzugefügten Cassiakernmehls und Inulins in dem Fettersatzstoff 0,01 Gew.-% oder mehr bis 20 Gew.-% oder weniger beträgt, bezogen auf das Gesamtgewicht der Lebensmittel-, Futter- oder Getränkezusammensetzung.

12. Verwendung gemäß einem der vorstehenden Ansprüche zur Verbesserung des Mundgefühls und der Textur von Lebensmittel-, Futter- und Getränkezusammensetzungen.

## Revendications

1. Utilisation d'une composition comprenant de l'inuline et de la gomme cassia comme substitut de matière grasse dans des compositions alimentaires, de fourrage ou de boisson, dans laquelle la composition a un rapport en poids de gomme cassia à l'inuline de 1 : 15 à 1 : 5.

2. Utilisation selon la revendication 1, dans laquelle la composition est constituée d'inuline et de gomme cassia.

3. Utilisation selon la revendication 1, dans laquelle la composition comprend une quantité totale d'inuline et de gomme cassia de 0,01 % en poids ou plus à 100 % en poids ou moins, sur la base du poids total de la composition de substitut de matière grasse, ou
comprenant une quantité totale d'inuline et de gomme cassia de 1 % en poids ou plus à 90 % en poids ou moins, sur la base du poids total de la composition de substitut de matière grasse, ou
comprenant une quantité totale d'inuline et de gomme cassia de 10 % en poids ou plus à 80 % en poids ou moins, sur la base du poids total de la composition de substitut de matière grasse.

4. Utilisation selon l'une quelconque des revendications précédentes, dans laquelle la composition a
un rapport en poids de gomme cassia à l'inuline de 1 : 12 à 1 : 6, ou
un rapport en poids de gomme cassia à l'inuline de 1 : 10 à 1 : 7, ou
un rapport en poids de gomme cassia à l'inuline de 1 : 9 à 1 : 8.

5. Utilisation selon l'une quelconque des revendications précédentes, dans laquelle le poids moléculaire moyen en poids de la gomme cassia se situe dans la plage de 100 000 daltons ou plus à 1 500 000 daltons ou moins, ou
dans laquelle le poids moléculaire moyen en poids de la gomme cassia se situe dans la plage de 200 000 daltons ou plus à 1000 000 daltons ou moins, ou
dans laquelle le poids moléculaire moyen en poids de la gomme cassia se situe dans la plage de 300 000 daltons ou plus à 900 000 daltons ou moins.

6. Utilisation selon l'une quelconque des revendications précédentes, dans laquelle la viscosité de Brookfield de la gomme cassia est de 100 mPa.s ou plus à 500 mPa.s ou moins à 25° C, ou
dans laquelle la viscosité de Brookfield de la gomme cassia est de 150 mPa.s ou plus à 400 mPa.s ou moins à 25° C, ou
dans laquelle la viscosité de Brookfield de la gomme cassia est de 200 mPa.s ou plus à 350 mPa.s ou moins à 25° C.

7. Utilisation selon l'une quelconque des revendications précédentes, dans laquelle le degré de polymérisation de l'inuline se situe entre 15 ou plus et 70 ou moins, ou dans laquelle le degré de polymérisation de l'inuline se situe entre 23 ou plus et 70 ou moins.

8. Utilisation selon l'une quelconque des revendications précédentes, dans laquelle la composition alimentaire, de fourrage ou de boisson comprend une quantité totale de gomme cassia et d'inuline de 0,01 % en poids ou plus à 20 % en poids ou moins, sur la base du poids total de la composition alimentaire, de fourrage ou de boisson, ou
comprenant une quantité totale de gomme cassia et d'inuline de 0,05 % en poids ou plus à 10 % en poids ou moins, sur la base du poids total de la composition alimentaire, de fourrage ou de boisson, ou
comprenant une quantité totale de gomme cassia et d'inuline de 0,1 % en poids ou plus à 5 % en poids ou moins, sur la base du poids total de la composition alimentaire, de fourrage ou de boisson, ou
comprenant une quantité totale de gomme cassia et d'inuline de 0,2 % en poids ou plus à 2 % en poids ou moins, sur la base du poids total de la composition alimentaire, de fourrage ou de boisson, ou
comprenant une quantité totale de gomme cassia et d'inuline de 0,3 % en poids ou plus à 1 % en poids ou moins, sur la base du poids total de la composition alimentaire, de fourrage ou de boisson.

9. Utilisation selon la revendication 8, dans laquelle la composition alimentaire, de fourrage ou de boisson est un produit à base de fromage transformé, un produit à base de yaourt, un produit à base de viande transformée, un produit à base de crème glacée, un produit de dessert, un produit à base de margarine, une huile ou une matière grasse à tartiner, un produit d'épicerie fine ou une boisson laitière.

10. Utilisation selon la revendication 8, dans laquelle la composition alimentaire, de fourrage ou de boisson peut être obtenue par un procédé comprenant les étapes de :
(i) fourniture d'une composition de substitut de matière grasse telle que définie selon l'une quelconque des revendications 1 à 7 et d'additifs et ingrédients optionnels,
(ii) malaxage du mélange, et
(iii) traitement du mélange par la chaleur.

11. Utilisation selon la revendication 10, dans laquelle la quantité totale de gomme cassia et d'inuline ajoutée dans le substitut de matière grasse est de 0,01 % en poids ou plus à 20 % en poids ou plus, sur la base du poids total de la composition alimentaire, de fourrage ou de boisson.

12. Utilisation selon l'une quelconque des revendications précédentes, pour améliorer la sensation en bouche et la texture des compositions alimentaires, de fourrage ou de boisson.
